# EUROPEAN PATENT APPLICATION

(11) **EP 2 117 198 A1**
(43) Date of publication of application: **11.11.2009**
(21) Application number: 09251123.7
(22) Date of filing: 17.04.2009
(51) Int. Cl.: H04L 29/06, H04L 12/56

(54) **Mid-call redirection of traffic through application-layer gateways**

(30) Priority: 05.05.2008 US 115204
(71) Applicant: Avaya Inc., Basking Ridge, New Jersey 07920 (US)
(72) Inventor: Karacall-Akyamac, Bengi, Bridgewater, NJ 08807 (US); Boyle, Frank John III, Broomfield, CO 80020 (US); Karol, Mark John, Fair Haven, NJ 07704 (US); Krishnakumar, Anjur Sundaresan, Rocky Hill, NJ 08553 (US); Krishnan, Parameshwaran, Basking Ridge, NJ 07920 (US); Meloche, Jean, Madison, NJ 07940 (US)
(74) Representative: Williams, David John

(57) **Abstract**

A method and apparatus are disclosed for redirecting traffic associated with an application so that the traffic advantageously traverses (or "hairpins") through an application-layer gateway. Because the present invention advantageously redirects traffic without any participation by routers, no changes to or replacement of routers in a network is required. The illustrative embodiment is disclosed in the context of Internet telephony, but is also applicable to other kinds of applications and types of communication (*e*.*g*., Internet Protocol Television [IPTV], instant messaging [IM], videoconferencing, *etc*.)

## Description

The present invention relates to telecommunications in general, and, more particularly, to mid-call redirection of traffic through application-layer gateways.

A modem telecommunications system often comprises one or more switched telephone networks and one or more Internet Protocol-based packet networks. These two different types of networks are sometimes interconnected by an *application-layer gateway*, which acts as a translator between the two types of networks, thereby enabling communications-based applications (*e*.*g*., Voice over Internet Protocol [VoIP] telephony, videoconferencing, Internet Protocol Television [IPTV], *etc.*) over multiple transport protocols end to end. In particular, one of the primary functions of an application-layer gateway is to convert between the different transmission and coding techniques used across the different networks. For example, a Voice-over-Internet-Protocol-capable (VoIP-capable) application-layer gateway performs the conversion between time-division multiplexed (TDM) voice streams that are transmitted and received by a switched telephone network telecommunications terminal, and VoIP datagrams that are transmitted and received by an Internet Protocol (IP) endpoint (*e*.*g*., a VoIP-capable telecommunications terminal, *etc*.).

Other key functions of an application-layer gateway include voice and video compression and decompression, packetization, call routing, and control signaling. In addition, an application-layer gateway may provide features such as echo cancellation, tone detection, tone generation (*e*.*g*., dual tone multi-frequency tones, *etc*.), and conferencing, as well as interfaces to external controllers, billing systems, and network management systems.

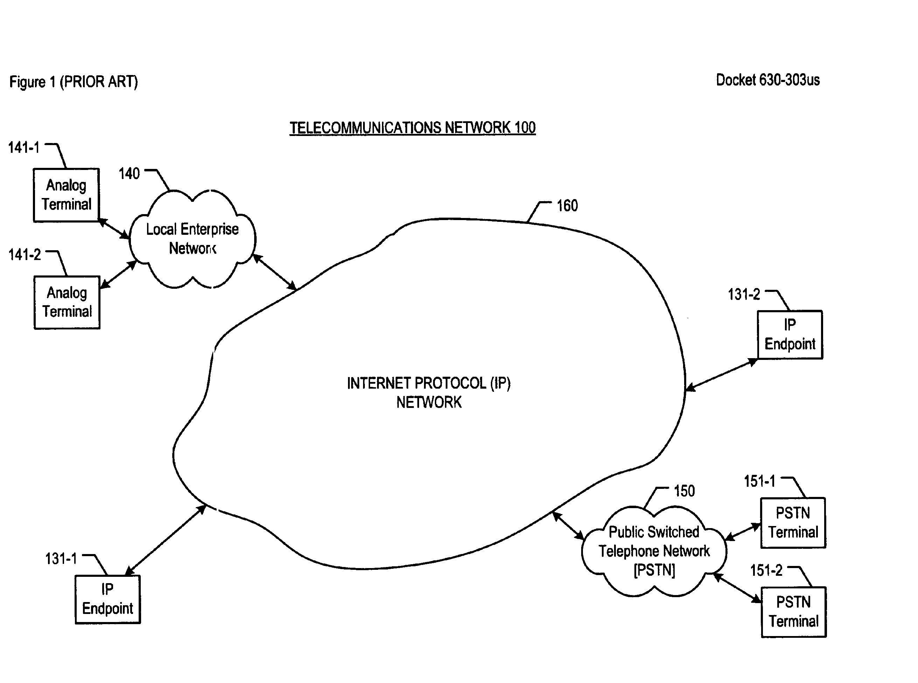

Figure 1 depicts the salient elements of illustrative telecommunications network 100, in accordance with the prior art. As shown in Figure 1, telecommunications network 100 comprises Internet Protocol (IP) endpoints 131-1 and 131-2, local enterprise network 140, analog terminals 141-1 and 141-2, Public Switched Telephone Network (PSTN) 150, PSTN telecommunications terminals 151-1 and 151-2, and Internet Protocol (IP) network 160, interconnected as shown.

Each of Internet Protocol (IP) endpoints 131-1 and 131-2 is a device capable of communicating in accordance with the Internet Protocol (*e*.*g*., an IP telephone, an IP headset, an IP handset, an IP softphone, an IP conference phone, *etc.).* In illustrative telecommunications network 100, Internet Protocol endpoints 131-1 and 131-2 are capable of communicating with each other over Internet Protocol (IP) network 160.

Local enterprise network 140 provides for local distribution of analog signals, such as in an enterprise system, and comprises wiring between Internet Protocol (IP) network 160 and analog terminals 141-1 and 141-2.

PSTN terminals 151-1 and 151-2 are devices capable of communicating over Public Switched Telephone Network (PSTN) 150 (*e*.*g*., a Plain Old Telephone Service [POTS] telephone, an Integrated Services Digital Network [ISDN] telephone, a cell phone, *etc*.).

Public Switched Telephone Network (PSTN) 150 comprises one or more transmission-related nodes such as switches that are used to direct call-related signals from one or more sources to the correct destinations of those signals. PSTN 150 is capable of handling either analog or digital bearer information in circuit-switched calls among two or more devices, such as PSTN terminals 151-1 and 151-2.

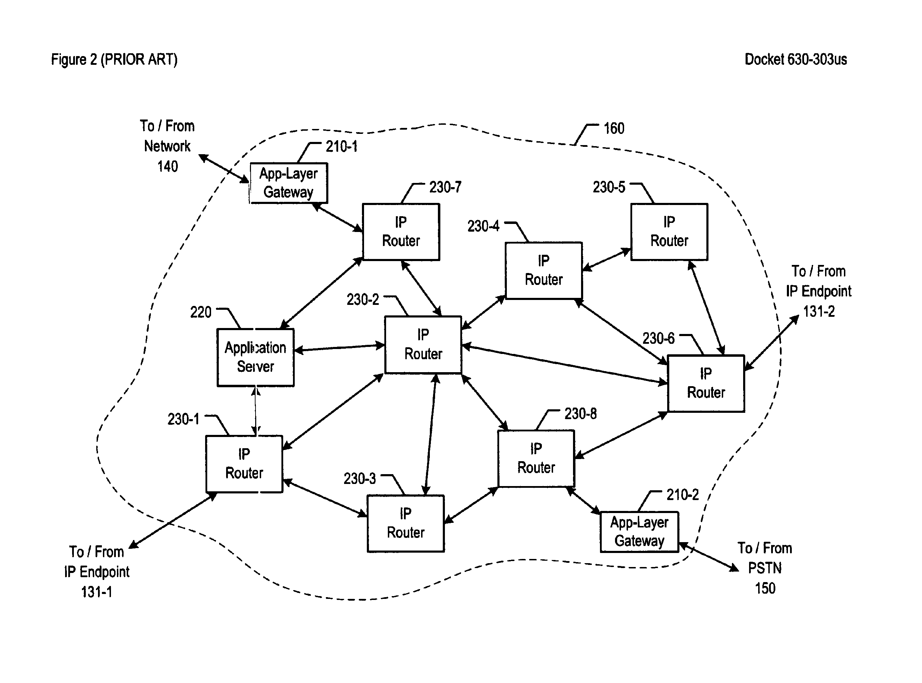

Internet Protocol (IP) network 160 comprises one or more transmission-related nodes that are used to direct packets from one or more sources to their appropriate destination(s) in accordance with the Internet Protocol. Internet Protocol (IP) network 160 is described in detail below and with respect to Figure 2.

Figure 2 depicts the salient elements of Internet Protocol (IP) network 160, in accordance with the prior art. As shown in Figure 2, IP network 160 comprises application-layer gateways 210-1 and 210-2, application server 220, and Internet Protocol (IP) routers 230-1 through 230-8, interconnected as shown. (As will be appreciated by those skilled in the art, the fact that Internet Protocol network 160 as depicted in Figure 2 comprises two application-layer gateways and eight Internet Protocol routers is merely illustrative.)

Application-layer gateways 210-1 and 210-2 are data-processing systems that provide application-layer functions (*e*.*g*., Voice over IP functions, *etc*.) such as translation between different types of networks, compression, packetization, *etc*., as described above. In illustrative telecommunications network 100, application-layer gateway 210-1 acts as a translator between local enterprise network 140 and Internet Protocol network 160, and application-layer gateway 210-2 acts as a translator between Public Switched Telephone Network (PSTN) 150 and Internet Protocol network 160.

Application server 220 is a data-processing system that is capable of providing one or more services to support a particular application. For example, application server 220 might provide one or more Voice over Internet Protocol (VoIP) services such as call setup between two or more Internet Protocol endpoints, call modification, call termination, and so forth.

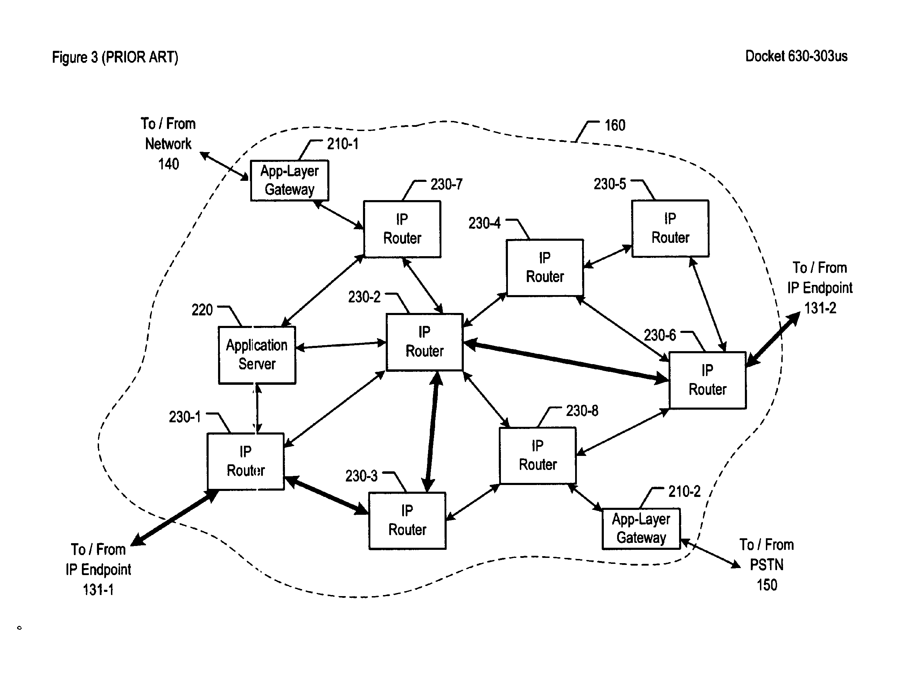

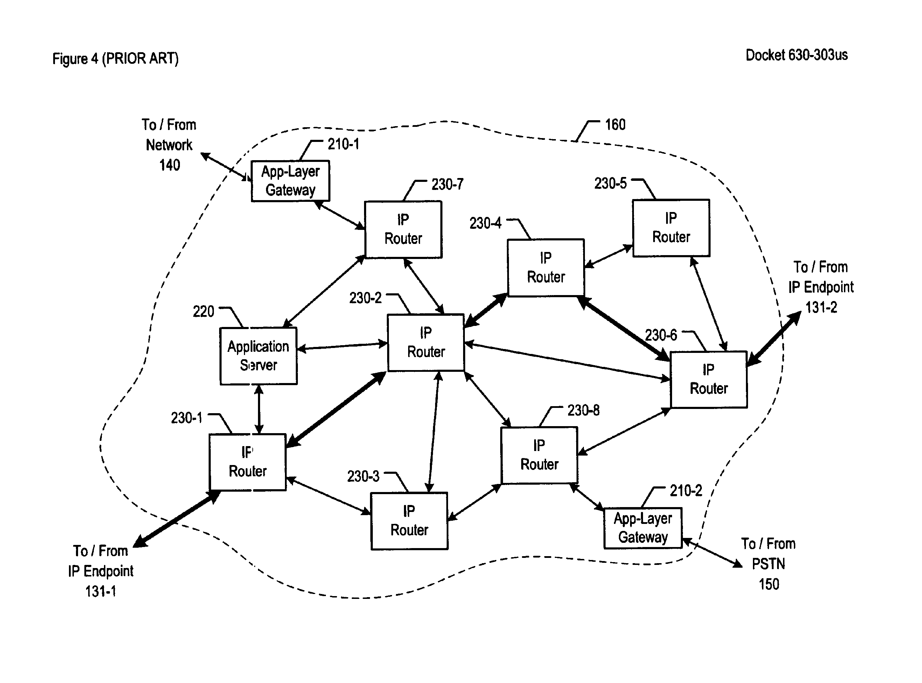

Each Internet Protocol (IP) router 230-i, where i is an integer between 1 and 8 inclusive, is a device that is capable of receiving Internet Protocol packets via one or more incoming links and of forwarding the packets along one or more outgoing links. Typically Internet Protocol routers 230-1 through 230-8 maintain routing tables that are dynamic and enable the routers to alter the paths by which traffic is transmitted through Internet Protocol network 160. For example, Figure 3 depicts a first path (via boldface arrows) through which packets might travel between Internet Protocol endpoints 131-1 and 131-2, while Figure 4 depicts a second path through which packets might travel between Internet Protocol endpoints 131-1 and 131-2. In accordance with the prior art, Internet Protocol routers 230-1 to 230-8 are capable of rerouting traffic along different paths over time in response to various conditions (*e*.*g*., link failures, congested routes, toll charges, *etc*.)

The present invention enables traffic to be redirected in a network without any participation from routers. In particular, traffic associated with an application (*e*.*g*., Internet Protocol telephony, Internet Protocol Television, *etc.*) can be redirected to traverse (or "hairpin") through an application-layer gateway when it is advantageous to do so, without participation from any routers. Such redirection might be advantageous for a variety of reasons, such as providing better quality of service (QoS) for a particular call, load balancing, fault tolerance, and so forth.

In accordance with the illustrative embodiment, traffic redirection can be performed by any component of the telephony system, other than a router. For example, the traffic-redirection might be performed by one or more application-level gateways, or one or more application servers, or one or more telecommunications terminals (*e*.*g*., Internet Protocol endpoints, *etc*.), or some combination or these elements. The present invention is thus advantageous in that it enables traffic redirection without requiring any changes to or replacement of routers in a network.

In accordance with the illustrative embodiment, traffic redirection can occur while a call is in progress (*i*.*e*., "mid-call redirection"). Moreover, the redirection is not restricted to the addition of an application-layer gateway to an existing path, but might instead replace an application-layer gateway in an existing path with a different application-layer gateway. The illustrative embodiment is disclosed in the context of Internet telephony; however, it will be clear to those skilled in the art, after reading this specification, how to make and use embodiments of the present invention for other kinds of applications and types of communication (*e*.*g*., Internet Protocol Television [IPTV], instant messaging [IM], videoconferencing, *etc*.)

The illustrative embodiment comprises: generating a signal that causes communication between a first node in a network and a second node in the network to traverse a second path in the network in lieu of a first path in the network; wherein the network comprises one or more application-layer gateways; and wherein the first path does not include any of the application-layer gateways; and wherein the second path includes one of the application-layer gateways.

Figure 1 depicts the salient elements of an illustrative telecommunications network of the prior art.

Figure 2 depicts the salient elements of Internet Protocol (IP) network 160, as shown in Figure 1, in accordance with the prior art.

Figure 3 depicts a first path through Internet Protocol network 160, in accordance with the prior art.

Figure 4 depicts a second path through Internet Protocol network 160, in accordance with the prior art.

Figure 5 depicts the salient elements of a telecommunications network in accordance with the illustrative embodiment of the present invention.

Figure 6 depicts a first illustrative path through telecommunications network 500, as shown in Figure 5, in accordance with the illustrative embodiment of the present invention.

Figure 7 depicts a second illustrative path through telecommunications network 500, in accordance with the illustrative embodiment of the present invention.

Figure 8 depicts a flowchart of a method for redirecting an existing call, in accordance with the illustrative embodiment of the present invention.

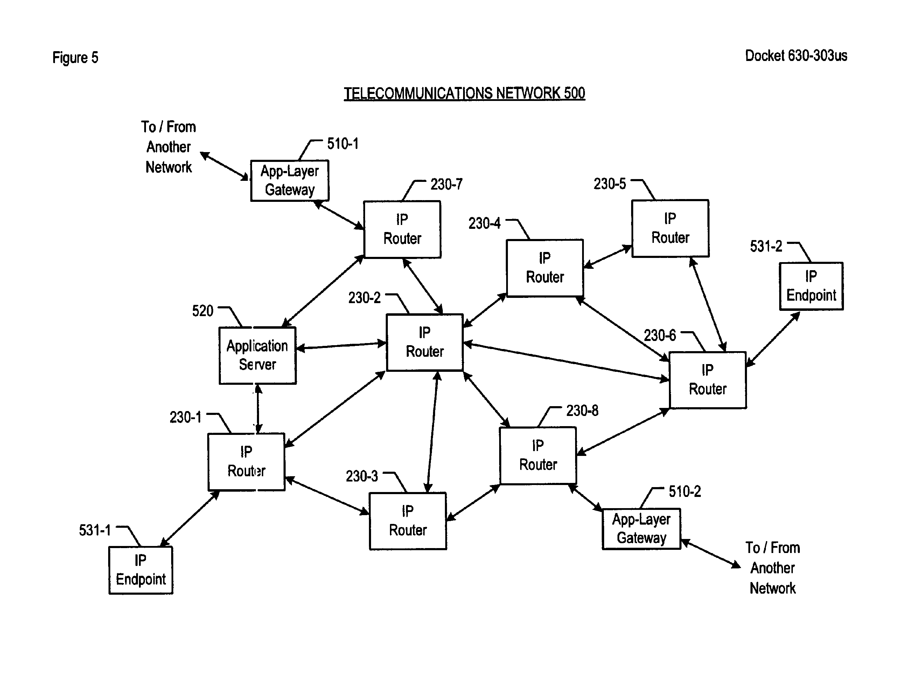

Figure 5 depicts the salient elements of telecommunications network 500, in accordance with the illustrative embodiment of the present invention. As shown in Figure 5, telecommunications network 500 comprises application-layer gateways 510-1 and 510-2, application server 520, Internet Protocol (IP) endpoints 531-1 and 531-2, and Internet Protocol (IP) routers 230-1 through 230-8, interconnected as shown. (As is the case for Internet Protocol network 160 of the prior art, the fact that telecommunications network 500 comprises two application-layer gateways and eight Internet Protocol routers is merely illustrative.)

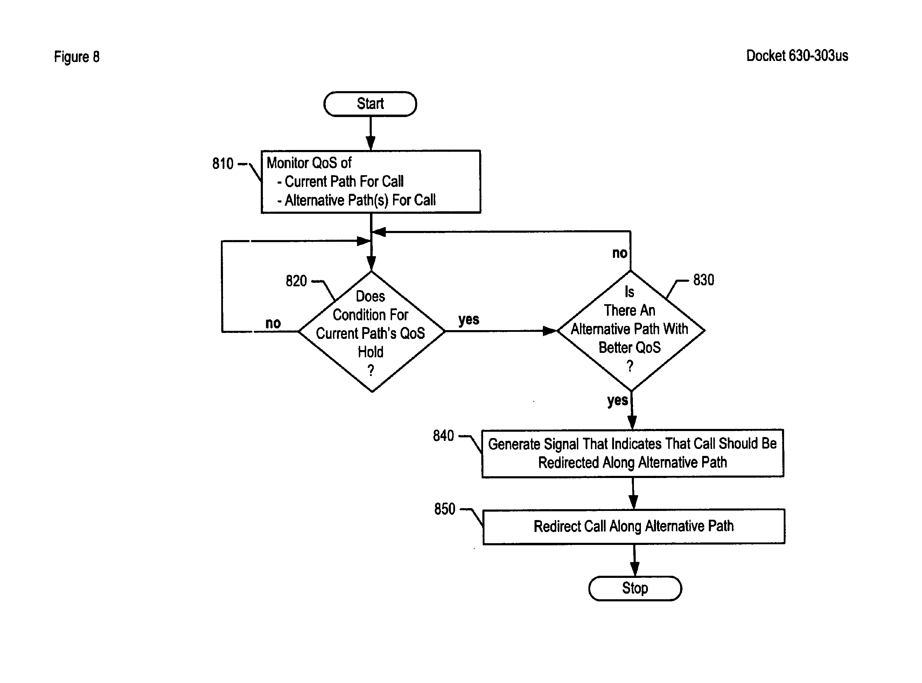

Application-layer gateways 510-1 and 510-2 are data-processing systems that are capable of providing application-layer functions (*e*.*g*., Voice over IP [VoIP] services, *etc*.) as in the prior art. Moreover, application-layer gateways 510-1 and 510-2 are also capable of participating in the performing of task 850 of Figure 8, and optionally, one or more other tasks of Figure 8, as described below. As will be appreciated by those skilled in the art, in some other embodiments of the present invention, application-layer gateways 510-1 and 510-2 might provide services for some other type of application (*e*.*g*., videoconferencing, Internet Protocol Television [IPTV], *etc*.), either instead of or in addition to Voice over IP.

Application server 520 is a data-processing system that is capable of providing one or more services to support a particular application (*e*.*g*., Voice over IP [VoIP], Internet Protocol Television [IPTV], *etc.),* and is also capable of participating in the performing of one or more of the tasks described below and with respect to Figure 8. In accordance with the illustrative embodiment, application server 520 is capable of providing Voice over Internet Protocol (VoIP) services such as call setup between two or more Internet Protocol endpoints, call modification, caii termination, *etc*. As will be appreciated by those skilled in the art, in some other embodiments of the present invention application server 520 might provide services for some other type of application (*e*.*g*., videoconferencing, Internet Protocol Television [IPTV], *etc.),* either instead of or in addition to Voice over IP .

Each of Internet Protocol (IP) endpoints 531-1 and 531-2 is a device capable of communicating in accordance with the Internet Protocol (*e*.*g*., an IP telephone, an IP headset, an IP handset, an IP softphone, an IP conference phone, *etc*.). Moreover, IP endpoints 531-1 and 531-2 are also capable of participating in the performing of one or more of the tasks described below and with respect to Figure 8.

Internet Protocol (IP) routers 230-1 through 230-8 remain unchanged from the prior art, as described above.

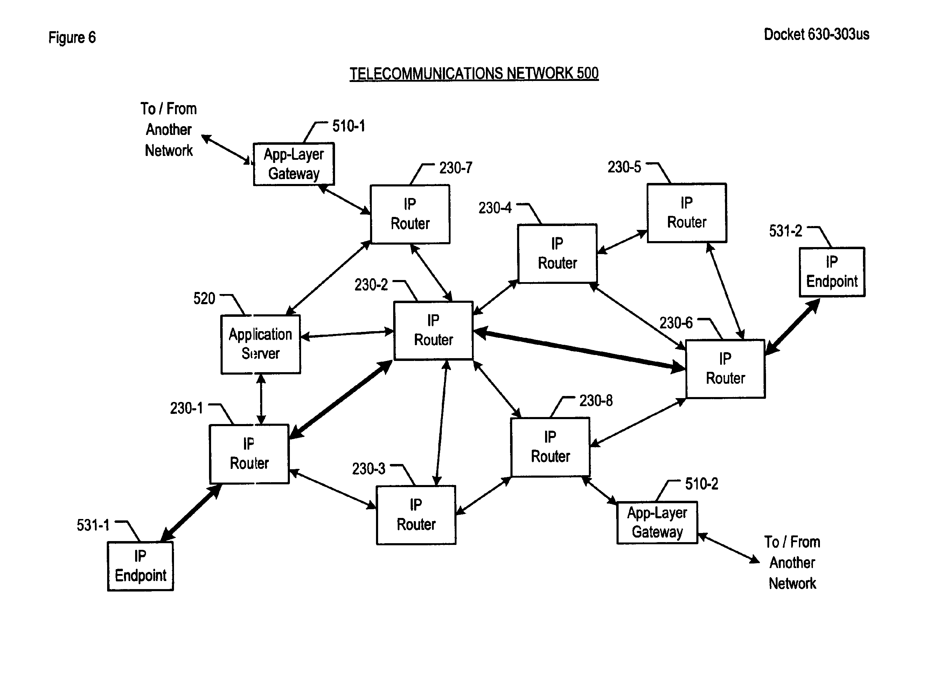

Figure 6 depicts a first illustrative path through telecommunications network 500, in accordance with the illustrative embodiment of the present invention. The boldface arrows in Figure 6 indicate the path through which packets travel between Internet Protocol endpoints 531-1 and 531-2. As shown in Figure 6, the nodes along this first path, other than Internet Protocol endpoints 531-1 and 531-2, consists solely of Internet Protocol routers - namely, routers 230-1, 230-2, and 230-6.

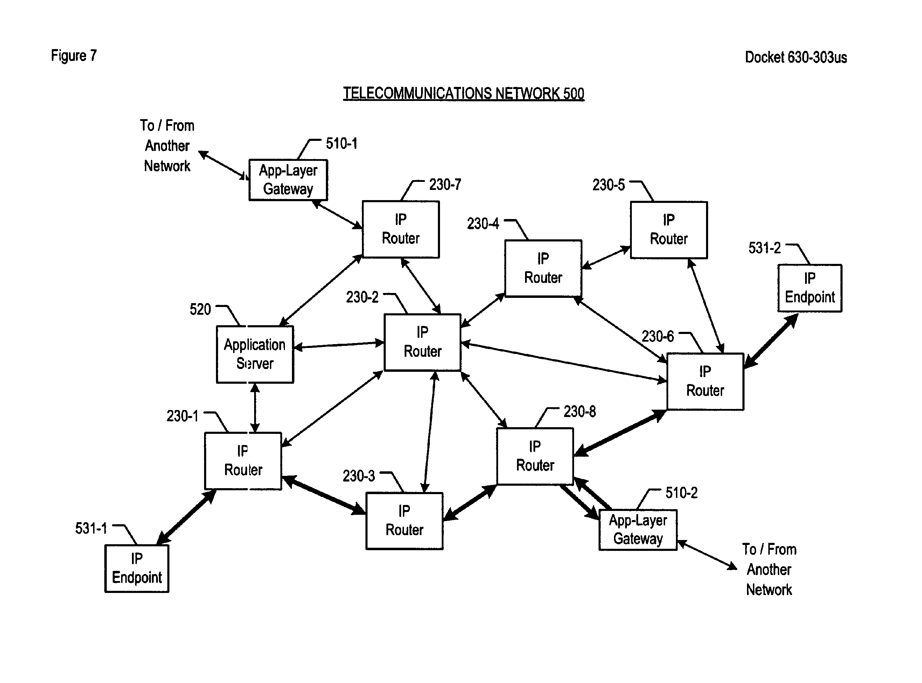

Figure 7 depicts a second illustrative path through telecommunications network 500, in accordance with the illustrative embodiment of the present invention. This second path corresponds to a change in the first path that is effected during a Voice over IP call between Internet Protocol endpoints 531-1 and 531-2, in accordance with the method of the illustrative embodiment described below and with respect to Figure 8. As shown in Figure 7, the second path now includes an application-layer gateway - namely gateway 510-2 - as a result of the redirection of the call. (The bi-directional link between IP router 230-8 and gateway 510-2 is depicted in Figure 7 as two uni-directional links in order to more clearly illustrate the second path.)

Figure 8 depicts a flowchart of a method for redirecting an existing call, in accordance with the illustrative embodiment of the present invention. As described above, in some embodiment the tasks of Figure 8 might be performed by one or more application-layer gateways 510, while in some other embodiments the tasks of Figure 8 might be performed by application server 520, while in still some other embodiments the tasks of Figure 8 might be performed by one or both of Internet Protocol endpoints 531-1 and 531-2.

In yet some other embodiments of the present invention, the tasks of Figure 8 might be divided among some combination of application-layer gateways 510, application server 520, and Internet Protocol endpoints 531-1 and 531-2, where a respective device might perform a particular task, or where two or more of these devices might participate in the performing of a particular task.

In any case, it will be clear to those skilled in the art, after reading this disclosure, how to make or program one or more of application-layer gateways 510, application server 520, and Internet Protocol endpoints 531-1 and 531-2 in order to implement the method of Figure 8.

At task 810, the quality of service (QoS) provided by the current path for an existing call, as well as the QoS provided by one or more alternative paths for the existing call, is monitored, in well-known fashion.

Task 820 checks for a particular condition pertaining to the quality of service of the current path. Examples of such conditions might include:
- whether QoS has decreased by a specified quantity;
- whether QoS has dropped below a specified threshold;
- whether QoS has decreased by a specified quantity in a given amount of time;
- whether a problem in the network has been detected;
- whether there is an alternative path whose QoS exceeds that of the current path by a specified threshold □;
- *etc.*
   If the condition tested for in task 820 is true, execution proceeds to task 830, otherwise, execution continues back at task 820.

Task 830 checks whether there is an alternative path for the current call with better quality of service (QoS) than that of the current path. This alternative path might add one or more application-layer gateways 510 to the current path, or might replace a particular application-layer gateway 510-*i* in the current path with another application-layer gateway 510-*j*. If such an alternative path is found, execution proceeds to task 840, otherwise execution continues back at task 820.

At task 840, a signal (*e*.*g*., a signaling protocol message such as H.323/SIP, *etc.)* is generated that indicates that the current call should be redirected along the specified alternative path.

At task 850, the existing call is redirected along the specified alternative path, in well-known fashion. After task 850 is performed, the method of Figure 8 terminates.

As will be appreciated by those skilled in the art, in accordance with the illustrative embodiment, the redirection of the call in task 850, as well as all of the other tasks 810 through 840, is performed without any participation by any of Internet Protocol routers 230-1 to 230-8. As noted above, the redirection is not necessarily restricted to the addition of an application-layer gateway to an existing path, but might instead replace an application-layer gateway in an existing path with a different application-layer gateway. Moreover, as will be appreciated by those skilled in the art, in some other embodiments of the present invention, there might be a plurality of paths exiting from an application-layer gateway, and traffic might be redirected from one such path out of the gateway to another such path.

As will further be appreciated by those skilled in the art, although the illustrative embodiment of the present invention is disclosed in the context of Internet telephony, it will be clear to those skilled in the art, after reading this specification, how to make and use embodiments of the present invention for other kinds of applications and types of communication (*e*.*g*., Internet Protocol Television [IPTV], instant messaging [IM], videoconferencing, *etc*.)

As will further be appreciated by those skilled in the art, although the illustrative embodiment of the present invention is disclosed in the context of the Internet Protocol, it will be clear to those skilled in the art, after reading this specification, how to make and use embodiments of the present invention for other types of packet-based protocols, as well as for circuit-switched networks, applications, and protocols.

It is to be understood that the disclosure teaches just one example of the illustrative embodiment and that many variations of the invention can easily be devised by those skilled in the art after reading this disclosure and that the scope of the present invention is to be determined by the following claims.

## Claims

1. A method comprising generating a signal that causes communication between a first node in a network and a second node in said network to traverse a second path in said network in lieu of a first path in said network;
wherein said network comprises one or more application-layer gateways; and
wherein said first path does not include any of said application-layer gateways; and
wherein said second path includes one of said application-layer gateways.

2. The method of claim 1 wherein said network comprises one or more Internet Protocol routers, and wherein communication between said first node and said second node is redirected along said second path without any participation by said Internet Protocol routers.

3. The method of claim 1 or claim 2, wherein said nodes are Internet Protocol endpoints and said application-layer gateways are Internet Protocol telephony gateways.

4. The method of any preceding claim, wherein said signal is generated in response to a decrease in the quality of service of said first path.

5. The method of any preceding claim, wherein said signal is generated in response to an indication that said second path provides better quality of service than said first path.

6. The method of any preceding claim, wherein said signal is generated in response to the detection of a problem in said network.

7. The method of any preceding claim, further comprising selecting an application-layer gateway for said second path from said one or more application-layer gateways.

8. A method comprising redirecting a call between a first node and a second node so that said call traverses a second path in lieu of a first path;
wherein said first node and said second node are in a network comprising one or more application-layer gateways; and
wherein said first path is a path in said network that
(i) connects said first node and said second node, and
(ii) does not include any of said application-layer gateways; and
wherein said second path is a path in said network that
(i) connects said first node and said second node, and
(ii) includes one of said application-layer gateways.

9. The method of claim 8 wherein said network comprises one or more Internet Protocol routers, and wherein said call is redirected without any participation by said Internet Protocol routers.

10. The method of claim 8 or claim 9, wherein said nodes are Internet Protocol endpoints and said application-layer gateways are Internet Protocol telephony gateways.
